(19) Europäisches Patentamt
European Patent Office
Office européen des brevets

(11) Veröffentlichungsnummer: 0 324 409
A1

(12) # EUROPÄISCHE PATENTANMELDUNG

(21) Anmeldenummer: 89100276.8

(51) Int. Cl.4: C09B 29/085 , D06P 1/18

(22) Anmeldetag: 09.01.89

(30) Priorität: 13.01.88 DE 3800708

(43) Veröffentlichungstag der Anmeldung: 19.07.89 Patentblatt 89/29

(84) Benannte Vertragsstaaten: CH DE ES FR GB IT LI

(71) Anmelder: CASSELLA Aktiengesellschaft
Hanauer Landstrasse 526
D-6000 Frankfurt am Main 61(DE)

(72) Erfinder: Bühler, Ulrich, Dr.
Kastanienweg 8
D-8755 Alzenau(DE)

(74) Vertreter: Urbach, Hans-Georg, Dr. et al
Hanauer Landstrasse 526
D-6000 Frankfurt am Main 61(DE)

(54) **Wasserunlösliche Monoazofarbstoffe, ihre Herstellung und Verwendung.**

(57) Wasserunlösliche Monoazofarbstoffe der allgemeinen Formel I

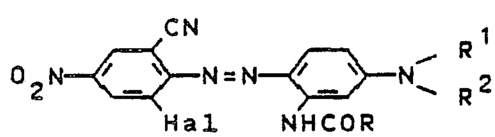

(I)

in welcher
$R^1$ und $R^2$ unabhängig voneinander lineares Alkyl mit 2 bis 4 C-Atomen,
R n-Propyl, i-Propyl, n-Butyl, sek-Butyl und Hal Brom oder Chlor
bedeuten, ergeben farbstarke blaue Färbungen.

EP 0 324 409 A1

## Wasserunlösliche Monoazofarbstoffe, ihre Herstellung und Verwendung

Die vorliegende Erfindung betrifft wertvolle neue, von ionogenen Gruppen freie wasserunlösliche Monoazofarbstoffe der allgemeinen Formel I

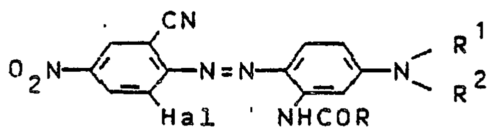

(I)

in welcher
$R^1$ und $R^2$ unabhängig voneinander lineares Alkyl mit 2 bis 4 C-Atomen,
R n-Propyl, i-Propyl, n-Butyl, sek-Butyl und Hal Brom oder Chlor
bedeuten.

Die Erfindung betrifft auch die Herstellung der erfindungsgemäßen Monoazofarbstoffe der allgemeinen Formel I, ihre Verwendung zum Färben von hydrophoben Fasermaterialien und deren Mischungen mit natürlichen Fasermaterialien, sowie Farbstoffzubereitungen und Färbeverfahren.

Verbindungen, die den erfindungsgemäßen Monoazofarbstoffen der allgemeinen Formel I strukturell verwendt sind, sind bereits bekannt und als Farbstoffe z.B. in der DAS 12 48 190 und der GBP 1 489 016 sowie als Ausgangsmaterialien bei der Herstellung von 2,6-Dicyanazofarbstoffen in der DOS 22 41 392 oder der EP 36 512 beschrieben. Der Farbstoff, der der allgemeinen Formel I entspricht, in der Hal für Brom und $R^1$, $R^2$ und R für Ethyl stehen, ist als C.I. Disperse Blue 183 bereits im Handel.

Es wurde nun überraschenderweise gefunden, daß die erfindungsgemäßen Farbstoffe der allgemeinen Formel I wesentlich verbesserte färberische Eigenschaften insbesondere ein verbessertes Ziehverhalten, selbst gegenüber dem Handelsfarbstoff haben.

Bevorzugte Monoazofarbstoffe der allgemeinen Formel I sind solche, in denen $R^1$ und $R^2$ unabhängig voneinander Ethyl oder n-Propyl bedeuten.

Bevorzugt sind auch solche Farbstoffe, in denen $R^1$ und $R^2$ gleich sind und besonders bevorzugt, wenn $R^1$ und $R^2$ n-Propyl bedeuten. Ganz besonders bevorzugt sind Farbstoffe, in denen $R^1$ und $R^2$ gleich sind und Ethyl bedeuten.

Weiter sind solche Farbstoffe bevorzugt, in denen R i-Propyl bedeutet und besonders bevorzugt, wenn R für n-Propyl steht.

Hal bedeutet bevorzugt Brom.

Ganz besonders bevorzugt ist der Farbstoff der allgemeinen Formel I, wobei $R^1$ und $R^2$ Ethyl, R n-Propyl und Hal Brom bedeuten.

Die erfindungsgemäßen Farbstoffe können in an sich bekannter Weise hergestellt werden, indem man ein Amin der allgemeinen Formel II, in der Hal für Brom oder Chlor steht

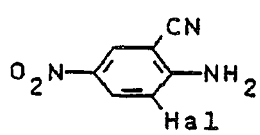

(II)

diazotiert und auf eine Kupplungskomponente der allgemeinen Formel III

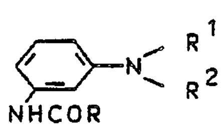

(III)

in der $R^1$, $R^2$ und R die oben angegebenen Bedeutungen haben, kuppelt.

Aus den Aminen der allgemeinen Formel II werden Diazoniumverbindungen in an sich bekannter Weise durch Einwirkung von salpetriger Säure oder anderen Nitrosoniumionen bildenden Systemen in einem sauren wäßrigen Medium einer Niederalkancarbonsäure, wie z.B. Ameisensäure, Essigsäure oder Propionsäure oder deren Mischungen oder einem organischen Lösungsmittel bei Temperaturen von 0 bis 40° C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40° C, vorzugsweise 0 bis 25° C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der Formel I kann wie üblich isoliert und getrocknet werden.

Die benötigten Ausgangsverbindungen der allgemeinen Formel II und III lassen sich aus bekannten Handelsprodukten nach bekannten Verfahren herstellen.

Die erfindungsgemäßen Azofarbstoffe sind einzeln oder im Gemisch untereinander oder auch im Gemisch mit anderen Dispersionsfarbstoffen vorzüglich zum Färben und Bedrucken von hydrophoben synthetischen Materialien geeignet.

Als hydrophobe synthetische Materialien kommen in Betracht: Cellulose-2 1/2-Acetat, Cellulosetriacetat, Polyamide, und besonders hochmolekulare Polyester, wie z.B. Polyethylenglykoltherephthalat.

Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen oder von Materialien aus Cellulosetriacetat eingesetzt. Diese Materialien können in Form von flächen- oder fadenförmigen Gebilden vorliegen und z.B. zu Garnen oder gewebten oder gestrickten Textilstoffen verarbeitet sein. Das Färben des genannten Fasergutes mit den erfindungsgemäßen Farbstoffen erfolgt in an sich bekannter Weise, vorzugsweise aus wäßriger Suspension, gegebenenfalls in Gegenwart von Carriern, zwischen 80 bis ca. 110° C nach dem Ausziehverfahren oder nach dem HT-Verfahren im Färbeautoklav bei 110 bis 140° C, sowie nach dem sogenannten Thermofixierverfahren, wobei die Ware mit der Färbeflotte geklotzt und anschließend bei etwa 180 bis 230° c fixiert wird. Das Bedrucken der genannten Materialien kann so durchgeführt werden, daß die mit erfindungs gemäß Farbstoffe enthaltenden Druckpasten bedruckte Ware zur Fixierung des Farbstoffs, gegebenenfalls in Gegenwart eines Carriers, bei Temperaturen zwischen 110 bis 230° C mit HT-Dampf, Druckdampf oder Trockenhitze behandelt wird. Man erhält auf diese Weise sehr farbstarke blaue Färbungen und Drucke mit sehr guten Echtheitseigenschaften, insbesondere einer sehr guten Licht- und Thermofixierechtheit.

Die erfindungsgemäßen Farbstoffe eignen sich auch zum Färben der vorstehend aufgeführten hydrophoben Materialien, aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid, mit alkylierbaren Verbindungen, wie z.B. Fettalkoholen, Fettami nen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkylaryl-polyglycolethersulfonate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 30 Gew.% und einen Dispergiergehalt bis zu etwa 25 % eingestellt. Aus ökonomischen Gründen werden Farbstoffgehalte von 15 Gew.% meist nicht unterschritten.

Die Dispersionen können auch noch weitere Hilfsmittel enthalten, z.B. solche, die als Oxydationsmittel wirken, wie z.B. Natrium-m-nitrobenzolsulfonat oder fungicide Mittel, wie z.B. Natrium-o-phenylphenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Continue-Verfahren, bei denen durch kontinuierliche Farbstoffeinspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z.B. Netz-, Oxidations-, Konservierungs- und Entstaubungsmittel.

Ein bevorzugtes Herstellungsverfahren für pulverförmige Farbstoffzubereitungen besteht darin, daß den oben be schriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, soweit verdünnt, daß sich für die Färbung ein Flottenverhältnis von 1 : 5 bis 1 : 50 ergibt. Zusätzlich werden den Flotten im allgemeinen weitere Färbereihilfsmittel, wie Dispergier-, Netz- und Fixierhilfsmittel zugesetzt.

Soll der Farbstoff für den Textildruck herangezogen werden, so werden die erforderlichen Mengen der Farbstoffeinstellungen zusammen mit Verdickungsmitteln, wie z.B. Alkali-Alginaten oder dgl. und gegebenenfalls weiteren Zusätzen, wie z.B. Fixierbeschleunigern, Netzmitteln und Oxidationsmitteln, zu Druckpasten verknetet.

Die Erfindung wird durch die Beispiele näher erläutert. Prozentangaben sind Gew.%.

Beispiel 1

24,2 g 2-Brom-6-cyan-4-nitranilin werden bei 15 bis 20 °C in einer Mischung aus 100 g konzentrierter Schwefelsäure und 100 g Eisessig mit 32,5 g 41,4%iger Nitrosylschwefelsäure diazotiert und bei 10 bis 15 °C auf 24,6 g N-n-Butyryl-N,N′-diethylphenylendiamin-1,3, die in 300 ml Wasser durch Zugabe von 7,5 g konzentrierter Schwefelsäure gelöst wurden, unter direkter Eiskühlung gekuppelt. Nach beendeter Kupplung wird der entstandene Farbstoff abfiltriert, mit Wasser neutral gewaschen und unter vermindertem Druck getrocknet. Es wurden 39 g des Farbstoffs der Formel

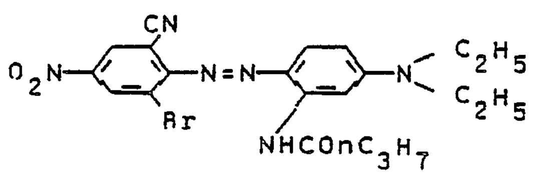

erhalten, der sich in o-Dichlorbenzol in blauer Farbe löst.

0,6 g des so erhaltenen Farbstoffs wird in feindispergierter Form in 2000 g Wasser eingerührt. Die Dispersion wird mit Essigsäure auf einen pH-Wert von 5 bis 6 eingestellt und mit 4,0 g Ammoniumsulfat und 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalat ein und färbt 1 h bei 130 °C.

Nach anschließendem Spülen, reduktiver Nachbehandlung mit einer 0.2%igen Natriumdithionitlösung während 15 min bei 70 bis 80 °C, Spülen und Trocknen erhält man eine farbstarke blaue Färbung mit sehr guten coloristischen Eigenschaften.

Wird unter sonst gleichen Bedingungen bei 125 °C gefärbt, erhält man eine Färbung gleicher Farbstärke. Die Nachzüge bei 135 °C sind farblos.

Beispiel 2

Werden, wie in Beispiel 1 beschrieben, anstelle von 24,6 g N-n-Butyryl-N,N′-diethylphenylendiamin-1,3 die gleiche Menge N-i-Butyryl-N,N′-diethylphenylendiamin-1,3 eingesetzt, so erhält man 40 g des Farbstoffs der Formel

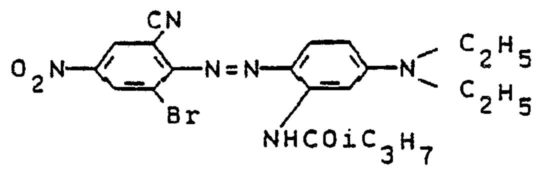

der sich in o-Dichlorbenzol ebenfalls mit blauer Farbe löst.

20,0 g des so erhaltenen Farbstoffs werden in feiner Verteilung einer Druckpaste, die 45,0 g Johannisbrotkernmehl, 6,0 g 3-nitrobenzolsulfonsaures Natrium und 3,0 g Zitronensäure auf 1000 g enthält, einverleibt. Wird Polyester mit dieser Druckpaste bedruckt, das bedruckte Gewebe nach dem Trocknen 15 min bei 1,5 atü Dampfdruck gedämpft, gespült, geseift, erneut gespült und getrocknet, so erhält man einen farbstarken blauen Druck von sehr guten coloristischen Eigenschaften.

In den nachstehenden Tabelle sind weitere erfindungsgemäße Farbstoffe angegeben, die auf Polyestermaterialien ebenfalls farbstarke blaue Färbungen bzw. Drucke mit ebenfalls sehr guten coloristischen Eigenschaften liefern.

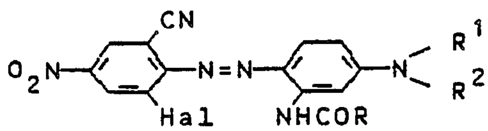

| Beispiel | $R^1$ | $R^2$ | R | Hal | Farbe auf PES |
|---|---|---|---|---|---|
| 3 | $n-C_3H_7$ | $n-C_3H_7$ | $n-C_3H_7$ | Br | blau |
| 4 | $n-C_4H_9$ | $n-C_4H_9$ | $n-C_3H_7$ | Br | blau |
| 5 | $C_2H_5$ | $n-C_3H_7$ | $n-C_3H_7$ | Br | blau |
| 6 | $C_2H_5$ | $n-C_4H_9$ | $n-C_3H_7$ | Br | blau |
| 7 | $n-C_3H_7$ | $n-C_4H_9$ | $n-C_3H_7$ | Br | blau |
| 8 | $C_2H_5$ | $C_2H_5$ | $n-C_3H_7$ | Cl | blau |
| 9 | $n-C_3H_7$ | $n-C_3H_7$ | $n-C_3H_7$ | Cl | blau |
| 10 | $C_2H_5$ | $n-C_3H_7$ | $n-C_3H_7$ | Cl | blau |
| 11 | $C_2H_5$ | $n-C_4H_9$ | $n-C_3H_7$ | Cl | blau |
| 12 | $n-C_3H_7$ | $n-C_3H_7$ | $i-C_3H_7$ | Br | blau |
| 13 | $n-C_4H_9$ | $n-C_4H_9$ | $i-C_3H_7$ | Br | blau |
| 14 | $C_2H_5$ | $n-C_3H_7$ | $i-C_3H_7$ | Br | blau |
| 15 | $C_2H_5$ | $n-C_4H_9$ | $i-C_3H_7$ | Br | blau |
| 16 | $C_2H_5$ | $C_2H_5$ | $i-C_3H_7$ | Cl | blau |
| 17 | $n-C_3H_7$ | $n-C_3H_7$ | $i-C_3H_7$ | Cl | blau |
| 18 | $C_2H_5$ | $n-C_3H_7$ | $i-C_3H_7$ | Cl | blau |
| 19 | $C_2H_5$ | $n-C_4H_9$ | $i-C_3H_7$ | Cl | blau |
| 20 | $C_2H_5$ | $C_2H_5$ | $n-C_4H_9$ | Br | blau |
| 21 | $n-C_3H_7$ | $n-C_3H_7$ | $n-C_4H_9$ | Br | blau |
| 22 | $C_2H_5$ | $n-C_3H_7$ | $n-C_4H_9$ | Br | blau |
| 23 | $C_2H_5$ | $C_2H_5$ | $n-C_4H_9$ | Cl | blau |
| 24 | $n-C_3H_7$ | $n-C_3H_7$ | $n-C_4H_9$ | Cl | blau |
| 25 | $C_2H_5$ | $n-C_3H_7$ | $n-C_4H_9$ | Cl | blau |
| 26 | $C_2H_5$ | $C_2H_5$ | $i-C_4H_9$ | Br | blau |
| 27 | $C_2H_5$ | $n-C_3H_7$ | $i-C_4H_9$ | Br | blau |
| 28 | $n-C_3H_7$ | $n-C_3H_7$ | $i-C_4H_9$ | Br | blau |
| 29 | $C_2H_5$ | $C_2H_5$ | $i-C_4H_9$ | Cl | blau |

## Ansprüche

1. Monoazofarbstoffe der allgemeinen Formel I

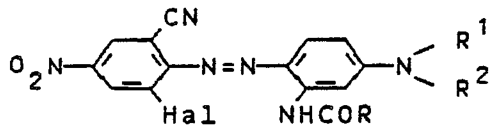

(I)

in welcher
$R^1$ und $R^2$ unabhängig voneinander lineares Alkyl mit 2 bis 4 C-Atomen,
R n-Propyl, i-Propyl, n-Butyl, sek-Butyl und Hal Brom oder Chlor
bedeuten.

2. Monoazofarbstoffe nach Anspruch 1, dadurch gekennzeichnet, daß R i-Propyl und insbesondere n-Propyl bedeutet.

3. Monoazofarbstoffe nach Anspruch 1 und/oder 2, dadurch gekennzeichnet, daß $R^1$ und $R^2$ gleich sind.

4. Monoazofarbstoffe nach einem oder mehreren der Ansprüche 1 bis 3, dadurch gekennzeichnet, daß $R^1$ und $R^2$ gleich sind und n-Propyl und insbesondere Ethyl bedeuten.

5. Monoazofarbstoffe nach einem oder mehreren der Ansprüche 1 bis 4, dadurch gekennzeichnet, daß Hal Brom bedeutet.

6. Monoazofarbstoffe der allgemeinen Formel I des Anspruchs 1, dadurch gekennzeichnet, daß $R^1$ und $R^2$ Ethyl, R n-Propyl und Hal Brom bedeuten.

7. Verfahren zur Herstellung der in einem oder mehreren der Ansprüche 1 bis 6 genannten Monoazofarbstoffe, dadurch gekennzeichnet, daß man ein Amin der allgemeinen Formel II, in der Hal für Brom oder Chlor steht

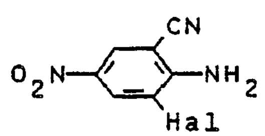

(II)

diazotiert und auf eine Kupplungskomponente der allgemeinen Formel III

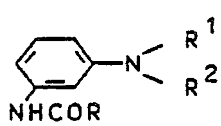

(III)

in der $R^1$, $R^2$ und R die im Anspruch 1 angegebenen Bedeutungen haben, kuppelt.

8. Farbstoffzubereitungen zur Herstellung von Färbeflotten und Druckpasten für hydrophobe Fasermaterialien und deren Mischungen mit natürlichen Fasermaterialien, bestehen aus einem feinverteilten wasserunlöslichen Azofarbstoff sowie üblichen Dispergier-und Hilfsmitteln und einem flüssigen Medium, vorzugsweise Wasser, dadurch gekennzeichnet, daß als Azofarbstoff ein Farbstoff der allgemeinen Formel I des Anspruchs 1 enthalten ist.

9. Verwendung der Monoazofarbstoffe der allgemeinen Formel I des Anspruchs 1 sowie der Farbstoffzubereitung des Anspruchs 8 zum Färben und Bedrucken von hydrophoben Fasermaterialien und deren Mischungen mit natürlichen Fasermaterialien.

10. Verfahren zum Färben und Bedrucken von hydrophoben Fasermaterialien und deren Mischungen mit natürlichen Fasermaterialien, dadurch gekennzeichnet, daß ein Monoazofarbstoff der allgemeinen Formel I des Anspruchs 1 verwendet wird.

Europäisches Patentamt

# EUROPÄISCHER RECHERCHENBERICHT

Nummer der Anmeldung

EP 89 10 0276

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | EP-A-0 211 325 (BAYER)<br>* Seite 54, Formel 2 * | 1-4,7,8 | C 09 B 29/085<br>D 06 P 1/18 |
| X | FR-A-1 382 655 (SANDOZ)<br>* Zusammenfassung * & DE-B-1 248 190 (Kat. D) | 1-5,7-10 | |
| D,X | GB-A-1 489 016 (YORKSHIRE CHEMICALS)<br>* Ansprüche * | 1-10 | |
| D,X | EP-A-0 036 512 (CASSELLA)<br>* Ansprüche; Seite 2, letzter Absatz * | 1-10 | |
| X | EP-A-0 073 382 (CASSELLA)<br>* Seite 2, Absatz 3 * | 1-10 | |

RECHERCHIERTE SACHGEBIETE (Int. Cl.4)

C 09 B

Der vorliegende Recherchenbericht wurde für alle Patentansprüche erstellt

| Recherchenort | Abschlußdatum der Recherche | Prüfer |
|---|---|---|
| DEN HAAG | 14-03-1989 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)